# EUROPEAN PATENT SPECIFICATION

(11) **EP 4 609 982 B1**
(45) Date of publication and mention of the grant of the patent: **28.10.2026**
(21) Application number: 24160238.2
(22) Date of filing: 28.02.2024
(51) Int. Cl.: B23K 26/06, B23K 26/142, B23K 26/26, B23K 33/00, B23K 103/04

(54) **LASER WELDING METHOD FOR THICK STEEL PLATES ASSEMBLY**
LASERSCHWEISSVERFAHREN FÜR DICKE STAHLPLATTENANORDNUNG
PROCÉDÉ DE SOUDAGE LASER POUR ENSEMBLE DE PLAQUES D'ACIER ÉPAISSES

(43) Date of publication of application: 03.09.2025
(73) Proprietor: Taiwan Mask Corporation, Hsinchu County 300 (TW)
(72) Inventor: LAI, Li-Wen, Baoshan Township, Hsinchu County 300 (TW); TSAI, Wei-Lun, Baoshan Township, Hsinchu County 300 (TW); CHEN, Ching-Cheng, Baoshan Township, Hsinchu County 300 (TW); TAI, Chih-Hui, Baoshan Township, Hsinchu County 300 (TW); HO, Hsin-I, Baoshan Township, Hsinchu County 300 (TW)
(74) Representative: Viering, Jentschura & Partner mbB Patent- und Rechtsanwälte

(56) References cited:
- CN-A- 113 182 688
- CN-B- 102 615 395
- US-A1- 2014 124 489

## Description

### FIELD OF THE INVENTION

The present invention relates to a laser welding method for thick steel plates.

### BACKGROUND OF THE INVENTION

Using a laser to weld thick steel plates is a common technology nowadays. For example, Chinese Patent Publication No. CN 113695744 A discloses an energy-constrained, narrow-gap, wire-filling laser welding method, relating to the field of laser welding technology. The method includes the following steps: having a groove design, wherein a groove is formed between two parts to be welded; preparation before welding, wherein the two parts to be welded are fixed on the workbench, and a protective gas is used to clean the groove; pre-welding, wherein a welding wire is fed into the bottom of the groove, and a laser beam pre-welds the welding wire and the parts to be welded for the welding wire to be fixed at the bottom of the groove, and pre-welding uses a positive defocused laser beam to enter the groove for welding; continuous welding, wherein a negative defocused laser beam enters the groove for welding, and the focal point is located inside the welding wire.

However, in the aforementioned patent, it is necessary to machine bevels on both parts to be welded to form the groove. The process is more troublesome and the cost is higher.

CN 113182688 A discloses a thick plate narrow gap double-beam laser wire filling welding method comprising the following steps: step 1, groove design: processing a groove with a truncated edge between two test pieces to be welded, wherein the groove is a single-sided or double-sided U-shaped narrow gap groove; step 2, preparation before welding: before welding, mechanically polishing and chemically cleaning the vicinity of the groove, and after drying, clamping and fixing two test pieces to be welded on a workbench; step 3, backing welding: performing single-side single-pass or double-side double-pass penetration welding on the truncated edges by using a ten-kilowatt high-power laser deep fusion welding; step 4, filling and welding: performing multi-pass filling welding on the narrow gap groove by using a ten-kilowatt high-power laser wire filling welding method.

### SUMMARY OF THE INVENTION

According to one aspect of the present invention, a laser welding method for thick steel plates is provided. The laser welding method comprises the following steps of: joining two thick steel plates, wherein a joint face of the thick steel plates extends along a joint line, at least one portion of the joint face of one of the thick steel plates is formed with a groove along a grooving line, a grooving angle is defined between the grooving line and the joint line, the grooving angle is between 3 degrees and 15 degrees, and a bottom width of the groove is between R0 and R10 mm; feeding a filler into the groove and using a laser to weld the joint face having the groove through the filler to form a filler region, wherein the laser has a power of between 7,000 and 20,000 watts. After the filler region is cooled and solidified, the thick steel plates are combined with each other. A thickness of each filler layer in the filler region is between 4 and 6 mm.

According to an example useful for understanding but not forming part of the present invention, a thick steel plate assembly welded by laser welding is provided. The thick steel plate assembly comprises two thick steel plates and a filler region. The steel plates are joined. A joint face of the steel plates extends along a joint line. At least one portion of the joint face of one of the thick steel plates is formed with a groove along a grooving line. A grooving angle is defined between the grooving line and the joint line. The grooving angle is between 3 degrees and 15 degrees. A bottom width of the groove is between R0 and R10 mm. The filler region is formed by feeding a filler into the groove and using a laser to weld the joint face having the groove through the filler. The laser has a power of between 7,000 and 20,000 watts. After the filler region is cooled and solidified, the thick steel plates are combined with each other. A thickness of each filler layer in the filler region is between 4 and 6 mm.

One portion not having the groove of the joint face of one of the thick steel plates has a depth greater than 0 mm but not greater than 50 mm. Before using the laser to weld the joint face having the groove through the filler, the joint face not having the groove is welded using the laser. A welding angle is defined between the laser and the joint line. The welding angle is between 0 degrees and 10 degrees. The laser welds the joint face to form a molten region extending along the joint line. A molten depth of the molten region is substantially equal to the depth of the joint face not having the groove. A molten width of the molten region is between 4 and 7 mm. After the molten region and the filler region are cooled and solidified, the thick steel plates are combined with each other.

When the laser is used to weld the joint face not having the groove, the following conditions are met: a defocusing distance of the laser is between 0 and ± H/2 mm, H is the depth of the joint face not having the groove; the laser has a power variation of ± 3%.

Preferably, an action of the laser is one of scanning, robotic arc scanning and swing scanning. The laser has a swing frequency ranging from 0 to 100 Hz.

Preferably, when the laser is used to weld the joint face having the groove through the filler, at least one of the following conditions is met: the laser has a welding speed ranging from 5 to 30 millimeters per second; the filler is fed at a feeding speed ranging from 10 to 200 millimeters per second; a feeding angle is defined between the filler and the joint line and the feeding angle is between 0 degrees and 60 degrees; the bottom width is a diameter of a circle at a bottom of the groove.

According to the above technical features, the present invention can achieve the following effects:

Since only one of the thick steel plates is formed with the groove, the process can be simplified greatly and the cost can be reduced.

The bottom of the groove has a circle to ensure that there is no dead space for subsequent filling.

### BRIEF DESCRIPTION OF THE DRAWINGS

FIG. 1 is an exploded view of an embodiment the present invention;
FIG. 2 is a flow block diagram of the embodiment of the present invention;
FIG. 3 is a front view of the embodiment of the present invention, showing the groove;
FIG. 4 is a first schematic view of the embodiment of the present invention, showing the welding angle;
FIG. 5 is a second schematic view of the embodiment of the present invention, showing the defocusing distance;
FIG. 6 is a third schematic view of the embodiment of the present invention, showing the filler region;
FIG. 7 is a first photograph of the embodiment of the present invention;
FIG. 8 is a second photograph of the embodiment of the present invention; and
FIG. 9 is a third photograph of the embodiment of the present invention.

### DETAILED DESCRIPTION OF THE PREFERRED EMBODIMENTS

Embodiments of the present invention will now be described, by way of example only, with reference to the accompanying drawings.

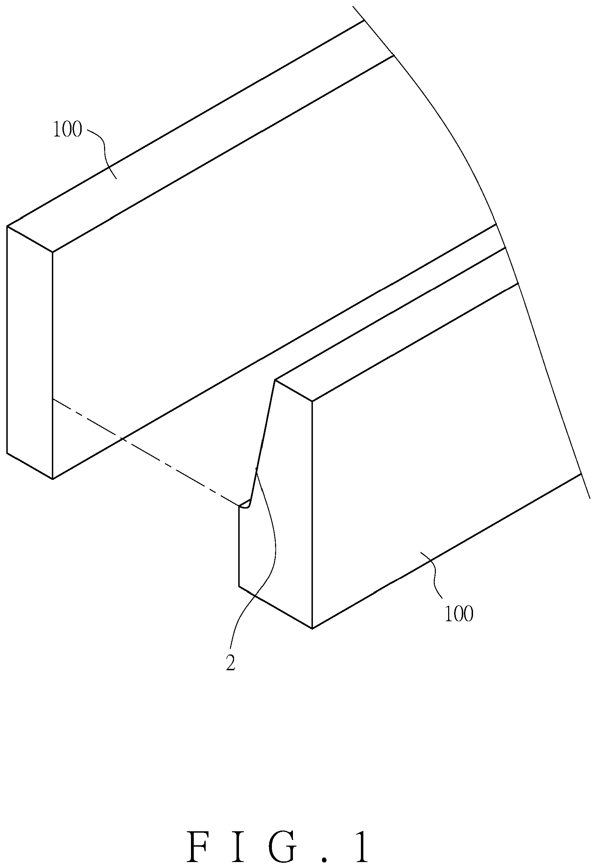

As shown in FIG. 1 through FIG. 3, the present invention discloses a thick steel plate assembly welded by laser welding and a laser welding method for thick steel plates.

The laser welding method for thick steel plates comprises the following steps:

Two thick steel plates 100 are joined. A joint face 1 of the thick steel plates 100 extends along a joint line L1. When the thick steel plates 100 are joined, the thick steel plates 100 have a clearance range of not more than 5% of the width of the thick steel plates 100.

At least one portion of the joint face 1 of one of the thick steel plates 100 is formed with a groove 2 along a grooving line L2. A grooving angle *θ*1 is defined between the grooving line L2 and the joint line L1. The grooving angle *θ*1 is between 3 degrees and 15 degrees. The bottom width W1 of the groove 2 is between R0 and R10 mm. The depth (i.e., the first depth H1) of the groove 2 is between 10 and 50 mm. In actual implementation, the bottom width W1 may be the diameter of a circle at the bottom of the groove 2 to ensure that there is no dead space for subsequent filling.

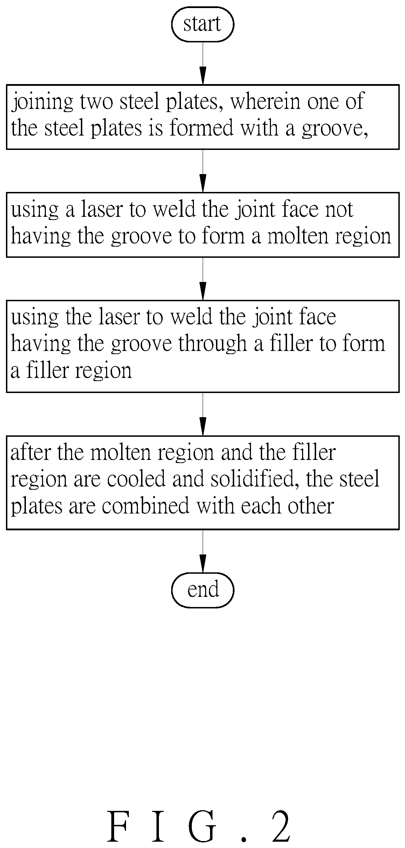

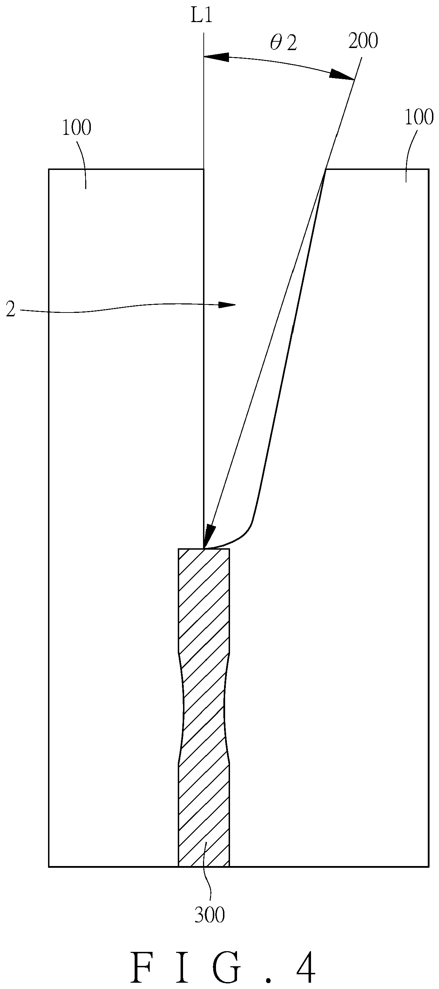

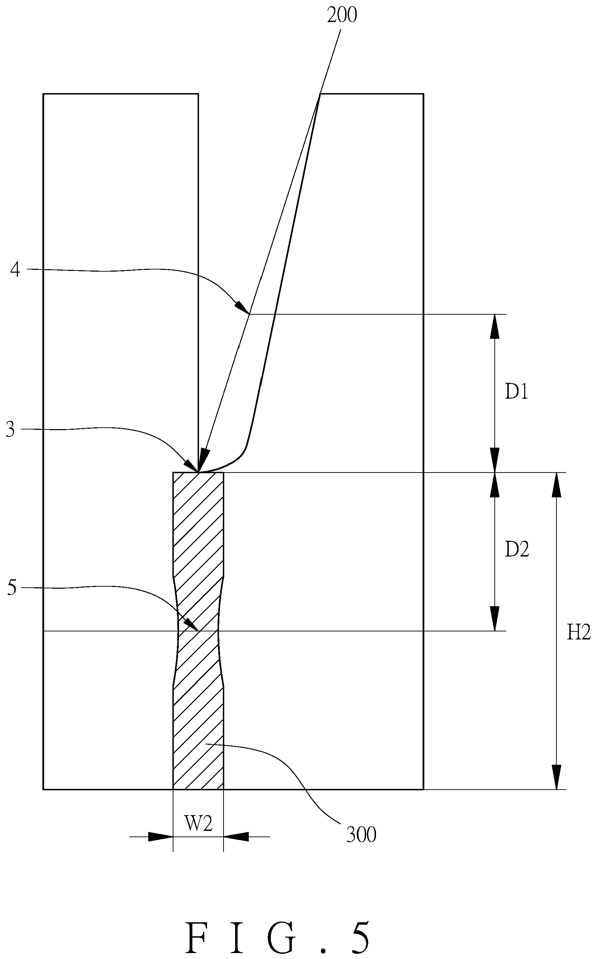

Please refer to FIG. 2 through FIG. 5. One portion not having the groove 2, (i.e., the second depth H2) of the joint face 1 of one of the thick steel plates 100 has a depth greater than 0 mm but not greater than 50 mm. The joint face 1 not having the groove 2 is first welded using a laser 200. A welding angle *θ*2 is defined between the laser 200 and the joint line L1. The welding angle *θ*2 is between 0 degrees and 10 degrees.

The laser 200 welds the joint face 1 to form a molten region 300 extending along the joint line L1. The molten depth of the molten region 300 is substantially equal to the depth of the joint face 1 not having the groove 2. The molten width W of the molten region 300 is between 4 and 7 mm.

A defocusing distance of the laser 200 is between 0 and ± 25 mm. That is, the positive defocusing distance D1 is up to 25 mm, and the negative defocusing distance D2 is up to -25 mm, which is equivalent to half of the second depth H2, namely, the depth of the joint face not having the groove 2. If the surface of the thick steel plates 100 serves as the focal point 3, the positive defocusing point 4 will be 25 mm above the focal point 3, and the negative defocusing point 5 will be 25 mm below the focal point 3.

The laser 200 has a power variation of ± 3%. The wavelength of the laser 200 is between 1030 and 1080 nanometers. The laser 200 has a welding speed ranging from 5 to 80 millimeters per second. The power of the laser 200 is between 20,000 and 30,000 watts.

The above-mentioned values may be changed according to the second depth H2. For example, when the second depth H2 is between 40 and 50 mm, the power of the laser 200 may be 30,000 watts, and the welding speed is between 5 and 80 millimeters per second.

A protective gas is used to remove a plasma generated during the welding of the laser 200. The protective gas is one of argon, helium, nitrogen and carbon dioxide, or a combination thereof.

By changing the defocusing distance and the power variation, the laser 200 enables the joint face 1 to form the molten region 300 extending along the joint line L1.

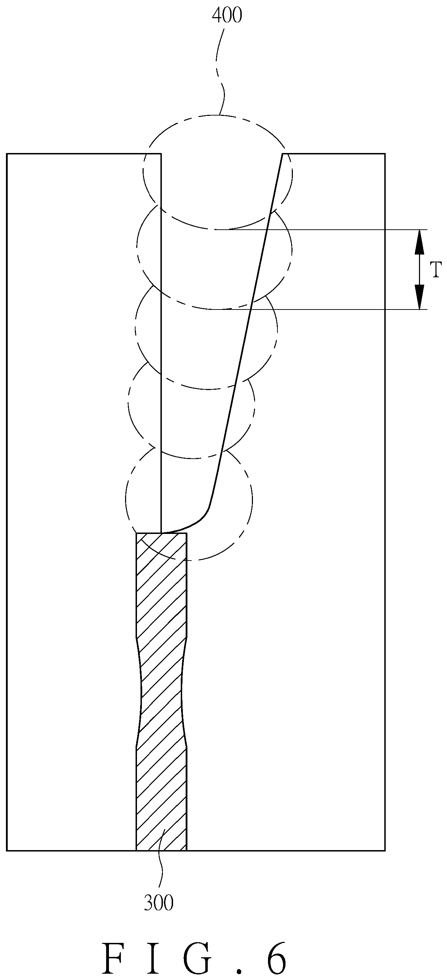

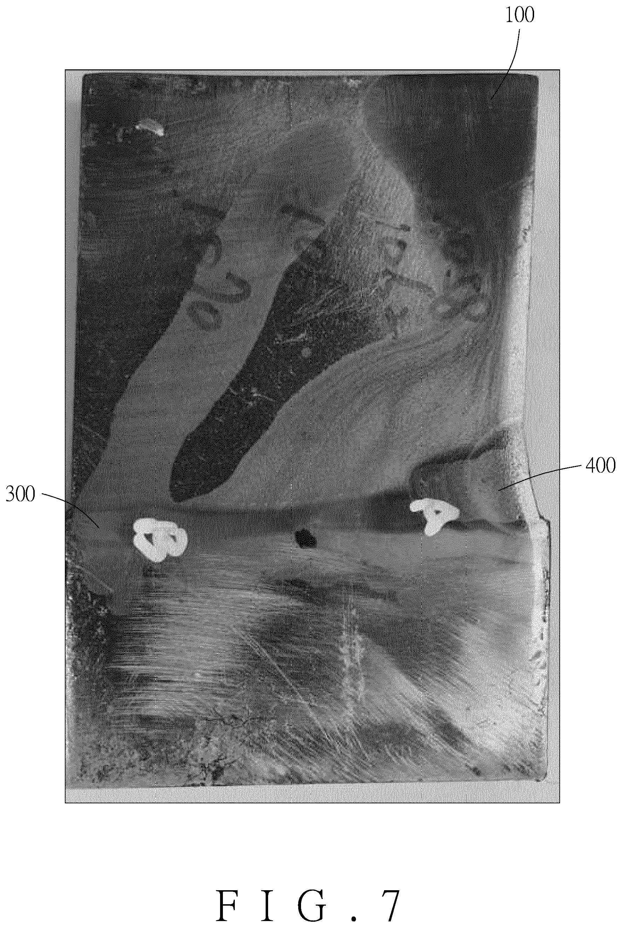

Please refer to FIG. 6 and FIG. 7, in cooperation with FIG. 2 through FIG. 4. Next, a filler is fed into the groove 2, and the laser 200 welds the joint face 1 having the groove 2 through the filler to form a filler region. The thickness T of each filler layer in the filler region 400 is between 4 and 6 mm.

The power of the laser 200 is between 7,000 and 20,000 watts. The welding speed of the laser 200 is between 5 and 30 millimeters per second. The filler is fed at a feeding speed ranging from 10 to 200 millimeters per second. A feeding angle is defined between the filler and the joint line L1. The feeding angle is between 0 degrees and 60 degrees.

The action of the laser 200 is one of scanning, robotic arc scanning and swing scanning. The laser 200 has a swing frequency ranging from 0 to 100 Hz.

After the molten region 300 and the filler region 400 are cooled and solidified, the thick steel plates 100 are combined with each other to form a thick steel plate assembly.

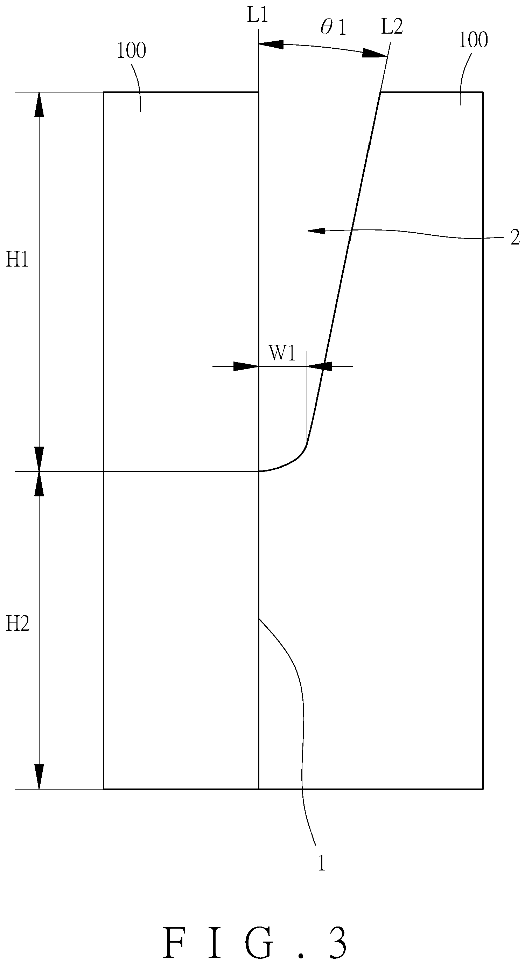

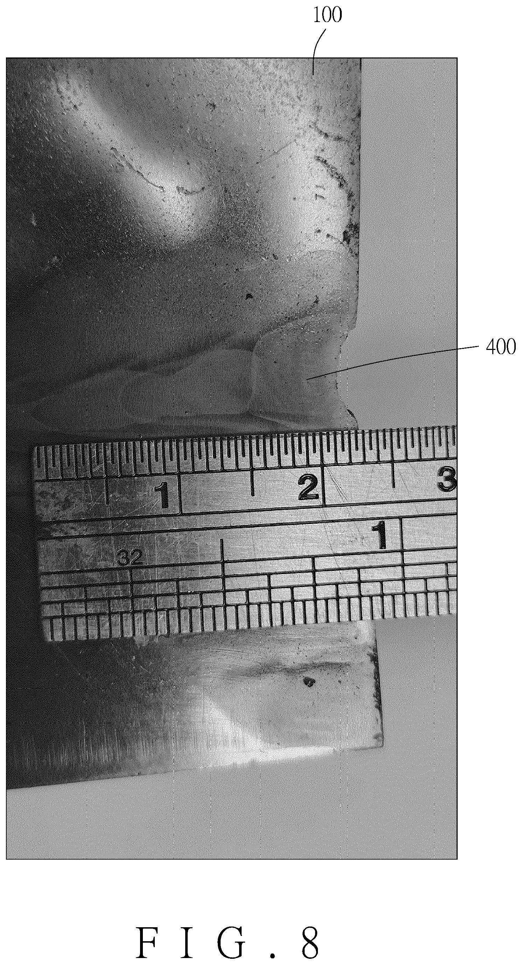

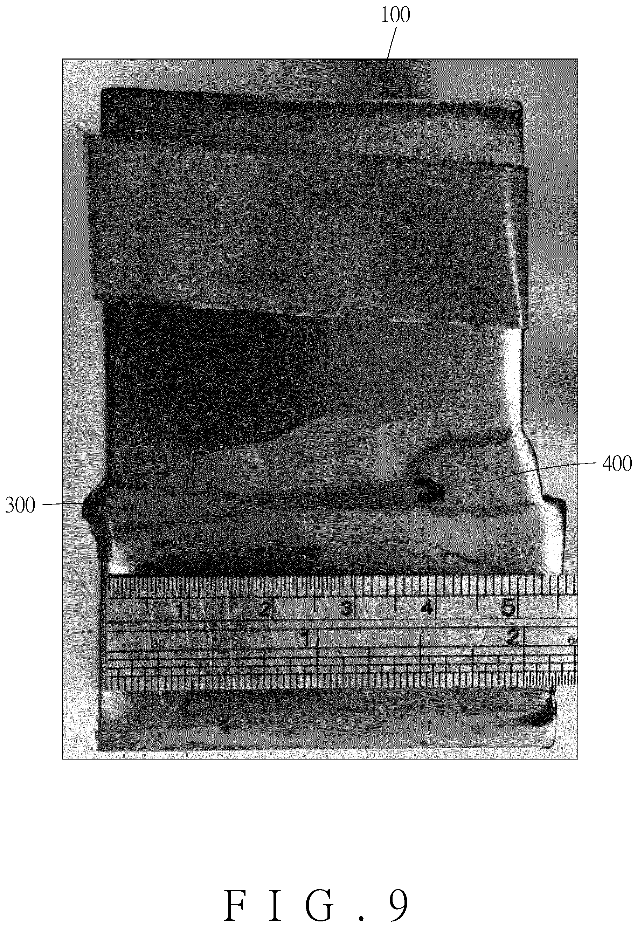

Please refer to FIG. 8 and FIG. 9, in cooperation with FIG. 3 and FIG. 6. As can be seen from the photographs of the actual thick steel plate assembly manufactured by the laser welding method, the thickness T of each filler layer in the filler region 400 is indeed between 4 and 6 mm, the first depth H1 is indeed between 10 and 50 mm, and the second depth H2 is indeed not greater than 50 mm.

Since only one of the thick steel plates 100 is formed with the groove 2, the process can be simplified greatly and the cost can be reduced.

Although particular embodiments of the present invention have been described in detail for purposes of illustration, various modifications and enhancements may be made without departing from the scope of the present invention. Accordingly, the present invention is not to be limited except as by the appended claims.

## Claims

1. A laser welding method for joining two thick steel plates (100),
wherein a joint face (1) of the thick steel plates (100) extends along a joint line (L1),
wherein at least one portion of the joint face (1) of one of the thick steel plates (100) is formed with a groove (2) along a grooving line (L2),
wherein a grooving angle (θ1) is defined between the grooving line (L2) and the joint line (L1), and the grooving angle (θ1) is between 3 degrees and 15 degrees,
wherein a bottom width (W1) of the groove (2) is between R0 and R10 mm, and
wherein one portion not having the groove (2) of the joint face (1) of one of the thick steel plates (100) has a depth greater than 0 mm but not greater than 50 mm;
the method comprising the following steps of:
1) welding the joint face (1) not having the groove (2), using a laser (200),
wherein a welding angle (θ2) is defined between the laser (200) and the joint line (L1), the welding angle (θ2) being between 0 degrees and 10 degrees,
wherein the laser (200) welds the joint face (1) to form a molten region (300) extending along the joint line (L1), a molten depth of the molten region (300) being substantially equal to the depth of the joint face (1) not having the groove (2), a molten width (W) of the molten region (300) being between 4 and 7 mm, and wherein when the laser (200) is used to weld the joint face (1) not having the groove (2), the following conditions are met:
a defocusing distance of the laser (200) is between 0 and ± H/2 mm, H being the depth of the joint face (1) not having the groove (2), and
the laser (200) has a power variation of ± 3%; and
2) after welding the joint face (1) not having the groove (2), feeding a filler into the groove (2) and, using the laser (200), welding the joint face (1) having the groove (2) through the filler to form a filler region (400),
wherein the laser (200) has a power of between 7,000 and 20,000 watts, and
wherein after the molten region (300) and the filler region (400) are cooled and solidified, the thick steel plates (100) are combined with each other, and a thickness (T) of each filler layer in the filler region (400) is between 4 and 6 mm.

2. The laser welding method as claimed in claim 1, wherein an action of the laser (200) is one of scanning, robotic arc scanning and swing scanning, and the laser (200) has a swing frequency ranging from 0 to 100 Hz.

3. The laser welding method as claimed in claim 1, wherein when the laser (200) is used to weld the joint face (1) having the groove (2) through the filler, at least one of the following conditions is met: the laser (200) has a welding speed ranging from 5 to 30 millimeters per second; the filler is fed at a feeding speed ranging from 10 to 200 millimeters per second; a feeding angle is defined between the filler and the joint line (L1) and the feeding angle is between 0 degrees and 60 degrees; the bottom width (W1) is a diameter of a circle at a bottom of the groove (2).

## Patentansprüche

1. Laserschweißverfahren zum Verbinden von zwei dicken Stahlplatten (100),
wobei sich eine Fugenfläche (1) der dicken Stahlplatten (100) entlang einer Fugenlinie (L1) erstreckt,
wobei mindestens ein Teil der Fugenfläche (1) einer der dicken Stahlplatten (100) mit einer Nut (2) entlang einer Nutlinie (L2) versehen ist,
wobei ein Nutwinkel (θ1) zwischen der Nutlinie (L2) und der Fugenlinie (L1) definiert ist und der Nutwinkel (θ1) zwischen 3 Grad und 15 Grad liegt,
wobei die Bodenbreite (W1) der Nut (2) zwischen R0 und R10 mm liegt, und
wobei ein Teil der Fugenfläche (1) einer der dicken Stahlplatten (100), der keine Nut (2) aufweist, eine Tiefe aufweist, die größer als 0 mm, aber nicht größer als 50 mm ist;
wobei das Verfahren die folgenden Schritte umfasst:
1)Verschweißen der Fugenfläche (1), die keine Nut (2) aufweist, unter Verwendung eines Lasers (200),
wobei ein Schweißwinkel (θ2) zwischen dem Laser (200) und der Fugenlinie (L1) definiert ist und der Schweißwinkel (θ2) zwischen 0 Grad und 10 Grad liegt,
wobei der Laser (200) die Fugenfläche (1) verschweißt, um einen geschmolzenen Bereich (300) zu bilden, der sich entlang der Fugenlinie (L1) erstreckt, und die Schmelztiefe des geschmolzenen Bereich (300) im Wesentlichen gleich der Tiefe der Fugenfläche (1) ist, die keine Nut (2) aufweist, und die Schmelzbreite (W) des geschmolzenen Bereichs (300) zwischen 4 und 7 mm liegt, und wobei, wenn der Laser (200) zum Verschweißen der Fugenfläche (1), die keine Nut (2) aufweist, verwendet wird, die folgenden Bedingungen erfüllt sind:
ein Defokussierungsabstand des Lasers (200) liegt zwischen 0 und ±H/2 mm, wobei H die Tiefe der Fugenfläche (1) ist, die keine Nut (2) aufweist, und
der Laser (200) weist eine Leistungsschwankung von ±3 % auf; und
2) nach dem Verschweißen der Fugenfläche (1), die keine Nut (2) aufweist, wird ein Füllstoff in die Nut (2) zugeführt und, unter Verwendung des Lasers (200) wird die Fugenfläche (1), die die Nut (2) aufweist, durch den Füllstoff verschweißt, um einen Füllstoffbereich (400) zu bilden, wobei der Laser (200) eine Leistung zwischen 7.000 und 20.000 Watt aufweist, und wobei nach dem Abkühlen und Erstarren des geschmolzenen Bereichs (300) und des Füllstoffbereichs (400) die dicken Stahlplatten (100) miteinander verbunden sind und die Dicke (T) jeder Füllstoffschicht in dem Füllstoffbereich (400) zwischen 4 und 6 mm liegt.

2. Laserschweißverfahren nach Anspruch 1, **dadurch gekennzeichnet, dass** die Bewegung des Lasers (200) eine aus Scannen, robotergestütztem Lichtbogenscannen und Pendelscannen ist und der Laser (200) eine Schwingungsfrequenz im Bereich von 0 bis 100 Hz aufweist.

3. Laserschweißverfahren nach Anspruch 1, **dadurch gekennzeichnet, dass**, wenn der Laser (200) verwendet wird, um die Fugenfläche (1), die die Nut (2) aufweist, durch den Füllstoff zu verschweißen, mindestens eine der folgenden Bedingungen erfüllt ist:
der Laser (200) weist eine Schweißgeschwindigkeit im Bereich von 5 bis 30 Millimetern pro Sekunde auf;
der Füllstoff wird mit einer Zuführgeschwindigkeit im Bereich von 10 to 200 Millimetern pro Sekunde zugeführt;
der Zuführwinkel ist zwischen dem Füllstoff und der Fugenlinie (L1) definiert und der Zuführwinkel liegt zwischen 0 Grad und 60 Grad; und
die Bodenbreite (W1) ist der Durchmesser eines Kreises am Boden der Nut (2).

## Revendications

1. Procédé de soudage au laser pour assembler deux tôles d'acier épaisses (100),
une face de jonction (1) des tôles d'acier épaisses (100) s'étend le long d'une ligne de jonction (L1),
au moins une partie de la face de jonction (1) de l'une des tôles d'acier épaisses (100) comporte une rainure (2) le long d'une ligne de rainure (L2),
un angle de rainure (θ1) est défini entre la ligne de rainure (L2) et la ligne de jonction (L1), et l'angle de rainure (θ1) est compris entre 3 degrés et 15 degrés,
une largeur inférieure (W1) de la rainure (2) est comprise entre R0 et R10 mm, et
une partie ne comportant pas la rainure (2) de la face de jonction (1) de l'une des tôles d'acier épaisses (100) présente une profondeur supérieure à 0 mm mais ne dépassant pas 50 mm ;
le procédé comprenant les étapes suivantes :
1) Souder la face de jonction (1) ne comportant pas la rainure (2), à l'aide d'un laser (200),
un angle de soudage (θ2) est défini entre le laser (200) et la ligne de jonction (L1), l'angle de soudage (θ2) étant compris entre 0 degrés et 10 degrés,
le laser (200) soude la face de jonction (1) pour former une zone en état de fusion (300) s'étendant le long de la ligne de jonction (L1), une profondeur de fusion de la zone en état de fusion (300) étant sensiblement égale à la profondeur de la face de jonction (1) ne comportant pas la rainure (2), une largeur de fusion (W) de la zone en état de fusion (300) étant comprise entre 4 et 7 mm, et
lorsque le laser (200) est utilisé pour souder la face de jonction (1) ne comportant pas la rainure (2), les conditions suivantes sont remplies :
une distance de défocalisation du laser (200) est comprise entre 0 et ±H/2 mm, H étant la profondeur de la face de jonction (1) ne comportant pas la rainure (2), et
le laser (200) a une variation de puissance de ±3% ; et
2) Après avoir soudé la face de jonction (1) ne comportant pas la rainure (2), introduire un matériau de remplissage dans la rainure (2) et, à l'aide du laser (200), souder la face de jonction (1) comportant la rainure (2) à travers le matériau de remplissage afin de former une zone de matériau de remplissage (400),
le laser (200) a une puissance comprise entre 7,000 et 20,000 watts, et
une fois la zone en état de fusion (300) et la zone de matériau de remplissage (400) refroidies et solidifiées, les tôles d'acier épaisses (100) sont combinées entre elles, et une épaisseur (T) de chaque couche de matériau de remplissage dans la zone de remplissage (400) est comprise entre 4 et 6 mm.

2. Procédé de soudage au laser selon la revendication 1, **caractérisé par le fait qu'**une action du laser (200) est soit un balayage, soit un balayage en arc robotisé, soit un balayage oscillant, et le laser (200) a une fréquence d'oscillation comprise entre 0 et 100 Hz.

3. Procédé de soudage au laser selon la revendication 1, **caractérisé par le fait que** lorsque le laser (200) est utilisé pour souder la face de jonction (1) comportant la rainure (2) à travers le matériau de remplissage, au moins l'une des conditions suivantes est remplie : le laser (200) a une vitesse de soudage comprise entre 5 et 30 millimètres par seconde ; le matériau de remplissage est amené à une vitesse d'alimentation comprise entre 10 et 200 millimètres par seconde ; un angle d'alimentation est défini entre le matériau de remplissage et la ligne de jonction (L1) et l'angle d'alimentation est compris entre 0 degrés et 60 degrés ; la largeur inférieure (W1) correspond au diamètre d'un cercle situé au fond de la rainure (2).
